# EUROPÄISCHE PATENTSCHRIFT

(11) **EP 1 511 973 B1**
(45) Veröffentlichungstag und Bekanntmachung des Hinweises auf die Patenterteilung: **08.07.2009**
(21) Anmeldenummer: 03720219.9
(22) Anmeldetag: 20.03.2003
(51) Int. Cl.: G01D 5/244

(54) **VERFAHREN UND ANORDNUNG ZUR ERFASSUNG DER BEWEGUNG EINES ELEMENTS**
METHOD AND DEVICE FOR DETECTION OF THE MOVEMENT OF AN ELEMENT
PROCEDE ET ENSEMBLE DE DETECTION DU MOUVEMENT D'UN ELEMENT

(30) Priorität: 25.05.2002 DE 10223358
(43) Veröffentlichungstag der Anmeldung: 09.03.2005
(73) Patentinhaber: ROBERT BOSCH GMBH, 70442 Stuttgart (DE)
(72) Erfinder: BLOCK, Ruediger, 70825 Korntal-Muenchingen (DE); ANDRIOT, Christelle, 70825 Korntal-Muenchingen (DE); RETTIG, Rasmus, 70839 Gerlingen (DE); WALTER, Klaus, 74321 Bietigheim-Bissingen (DE)
(86) Internationale Anmeldenummer: PCT/DE2003/000923
(87) Internationale Veröffentlichungsnummer: WO 2003/100352

(56) Entgegenhaltungen:
- DE-A- 19 823 089
- US-A- 5 202 842

## Beschreibung

### Stand der Technik

Die Erfindung betrifft ein Verfahren und eine Anordnung zur Erfassung der Bewegung eines Elements relativ zu einer Sensoranordnung, insbesondere zur sensorischen Erfassung des Drehwinkels eines rotierenden Elements, nach dem Oberbegriff des Hauptanspruchs.

Solche Sensoranordnungen werden in unterschiedlichen Ausführungsformen beispielsweise in Fahrzeugen bereits angewandt. Zum Beispiel mit sog. Hall-Elementen als Drehzahlfühler an den Rädern für ein Antiblockierbremssystem (ABS), als Drehzahl- und Phasengeber für die Motorsteuerung, als Drehzahlsensoren für die Getriebesteuerung oder als Lenkwinkelsensoren für sog. Fahrdynamikregelsysteme und für elektrische Lenkhilfen. Solche, beispielsweise aus der DE 197 50 304 A1 bekannte Sensoranordnungen, geben in der Regel digitale Signale, z.B. Schaltflanken, in Abhängigkeit von einem vor dem Sensor drehenden Geberrad aus.

Zu den wesentlichsten Anforderungen an diese Drehzahlsensoren im ABS sowie im Motor- und Getriebebereich gehört ein möglichst großer erreichbarer Luftspalt sowie eine hohe Immunität gegen Vibrationen. An diese Sensoranordnungen werden oft eine Reihe zum Teil gegensätzlicher Anforderungen gestellt, wobei ein hochempfindlicher Sensor an sich auch hochempfindlich für eine Anregung durch die das Messergebnis störenden Vibrationen ist. Die volle Funktionalität wird dabei einerseits für sehr große Luftspalte, d.h. ein sehr empfindlicher Sensor, gefordert und andererseits wird für kleine Luftspalte gefordert, dass hier bei einem großen Sensorsignal keine fehlerhaftes Signale durch Vibrationen auftreten dürfen.

Um die Empfindlichkeit solcher Sensoranordnungen gegenüber Vibrationen zu minimieren, wird bei herkömmlichen Drehzahlsensoren oft eine variable Hysterese eingesetzt. Hierbei muss zunächst die Signalamplitude gemessen werden und danach wird die Hysterese flexibel angepasst. Für große Eingangssignale wird dann eine große Hysterese und für kleine Eingangssignale wird dann eine entsprechend verringerte Hysterese gewählt, d.h. es wird bei einem kleinen Luftspalt die zum Schalten notwendige Amplitude erhöht.

Ein wesentlicher Nachteil dieser Methode ist der Verlust der Immunität gegen Luftspaltschläge im Betrieb, die kurzzeitig eine erhebliche Verringerung der Signalamplitude erzeugen können. Durch eine zuvor erhöhte Hysterese im Schaltpunkt des Sensors kann es dann bei einem Luftspaltschlag zum Signalverlust kommen.

Weiterhin lässt sich diese Methode nur nach erfolgter Kalibrierung des Sensors anwenden, da erst nach der Kalibrierung die Signalamplitude bekannt ist. Direkt nach dem Einschalten des Sensors bleibt die Vibrationsempfindlichkeit bestehen.

Zum Beispiel ist aus der US 5,451,891 A1 bekannt, dass eine adaptive, von der Signalamplitude abhängige Hysterese benutzt wird. Hier wird ein Kopplungsfaktor als Quotient aus der gemessenen Sensoramplitude und der Frequenz bestimmt und basierend auf diesem Kopplungsfaktor wird die Hysterese proportional zum Produkt aus Kopplungsfaktor und Frequenz eingestellt. Mit dieser bekannten Methode kann lediglich das Verhalten passiver Sensoren ausgeglichen werden, die für niedrige Anregungsfrequenzen ein sehr kleines Signals liefern und für hohe Frequenzen eine sehr große Amplitude ausgeben. Es kann jedoch nicht das Verhalten von Sensoren, die unabhängig von der Signalfrequenz eine konstante interne Signalamplitude liefern, verbessert werden.

DE 198 23 089 A1 offenbart einen Inkrementaldrehgeber mit einem Multipolmagneten und zwei Hall-Sensoren, dessen phasenversetze Signale zur Erfassung des Drehwinkels ausgewertet werden. Zur Detektion von fehlerhaften Signalen, z.B. durch Vibrationen oder Störimpulsen, werden die Sensorsignale einer Korrelations- und einer Plausibilitätsprüfung unterzogen.

### Vorteile der Erfindung

Die Erfindung betrifft eine Weiterbildung eines eingangs erwähnten Verfahrens zur Erfassung der Bewegung eines Elements relativ zu einer Sensoranordnung, bei dem Signale in Abhängigkeit von einem vor dem Sensor vorbeibewegten Impulsgeber ausgewertet werden. Erfindungsgemäß werden die Signale zweier in Bewegungsrichtung nebeneinander angeordneter Sensorelemente in vorteilhafter Weise ausgewertet. Hiermit ist beispielsweise bei der Erfassung der Drehung eines Geberrades als Impulsgeber die Detektierung einer radiale Vibration auf einfache Weise möglich. Eine solche Sensoranordnung kann z.B. als Drehzahlfühler in einem Kraftfahrzeug eingesetzt werden.

Die Phasengänge der Signale der einzelnen Sensorelemente und des Differenzsignals der einzelnen Sensorelemente werden vorteilhaft zur Erkennung von Vibrationen rechtwinklig zur Bewegungsrichtung, d.h. beispielsweise Schwingung im Abstand zwischen dem Geberrad und den Sensorelementen, dabei dahingehend ausgewertet, ob sich eine gleichsinnige Phasenänderung aller drei gemessener Signale ergibt.

Vorzugsweise erfolgt die Auswertung der Signale derart, dass die jeweiligen Nulldurchgänge, ggf. nach einer Offsetkorrektur, und die Steigungen in den Nulldurchgängen ermittelt werden und dass für den Fall, dass alle drei Signale gleichzeitige Nulldurchgänge und Steigungen mit gleichem Vorzeichen aufweisen, eine Vibration des Impulsgebers detektiert wird. Im Fall der Erkennung einer radialen Vibration kann auf einfache Weise das Ausgangssignal der Sensorschaltung unterdrückt werden.

Eine vorteilhafte Sensoranordnung zur Durchführung des zuvor beschriebenen Verfahrens weist mindestens zwei berührungslose Sensoren als Hall-Elemente oder magnetoresistive Elemente auf. Es kann dann eine Phasenerkennungsschaltung mit jeweils einem Eingang für die Signale der Sensorelemente und einem Eingang für das Differenzsignal aus den mindestens beiden Sensorsignalen vorgesehen werden.

Vorteilhaft ist auch eine Vibrationskontrollschaltung dem Ausgang der Sensoranordnung vorgeschaltet, die Eingänge für den Ausgang der Phasenerkennungsschaltung und für eine vom Differenzsignal angesteuerte Signalaufbereitungs- und Komparatorschaltung aufweist. Hiermit lassen sich die beschriebenen Vibrationen in der Sensoranordnung eindeutig unterdrücken, ohne das Sensorverhalten insbesondere unter Grenzbedingungen zu verschlechtern.

Eine Sensoranordnung, die gemäß der Erfindung arbeitet, kann in üblicher Weise bereits mit sog. differenziellen Hallsensoren versehen sein. Das erfindungsgemäße Verfahren ist in vorteilhafter Weise zur Differenzierung von Vibrationen in der Sensoranordnung gegenüber einer korrekten Stimulation der Sensorelemente geeignet und basiert im wesentlichen auf dem Einsatz eines differenziellen Sensorprinzips, d.h. auf der Anwendung mindestens zweier Sensorelemente. Möglich ist der Einsatz mit unterschiedlichen Sensortypen, wie den schon erwähnten Hall-Elementen oder den magnetoresistiven Elementen, wie die sog. AMR- oder GMR-Elemente, sowie beispielsweise mit optischen Drehzahlsensoren. Bei einem Drehzahlfühler können hiermit radiale Schwingung bzw. Vibrationen zwischen dem Geberrad und den Sensorelementen auf einfache Weise ausgewertet werden.

### Zeichnung

Ein Ausführungsbeispiel der Erfindung zur Erfassung der Bewegung eines Elements relativ zu einer Sensoranordnung wird anhand der Zeichnung erläutert. Es zeigen:
Figur 1 einen Teilbereich eines Geberrades als Impulsgeber eines Drehzahlfühlers und berührungslos gegenüberliegende Sensorelemente der Sensoranordnung,
Figur 2 ein Diagramm des Verlaufs der Ausgangssignale der Sensorelemente und eines hieraus gewonnenen Differenzsignals,
Figur 3 ein Diagramm das in Abwandlung des Verlaufs nach der Figur 1 eine Phasenverschiebung von 180° zwischen den Sensorelementen aufweist,
Figur 4 ein Diagramm des Verlaufs der Signale der Sensorelemente bei einer radialen Vibration und
Figur 5 ein Blockschaltbild einer Auswerteschaltung der Signale der Sensorelemente.

### Beschreibung des Ausführungsbeispiels

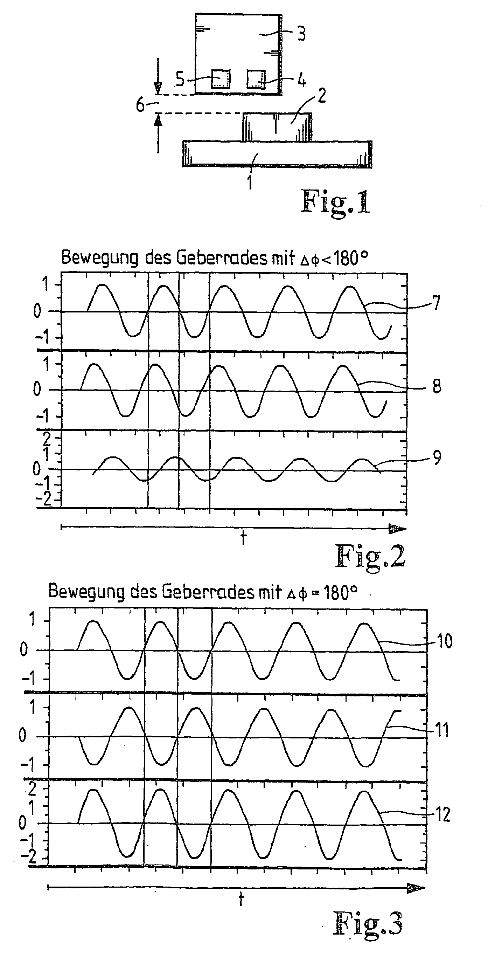

In Figur 1 ist ein Bereich eines Geberrades 1 eines Drehzahlfühlers gezeigt, der Zähne 2 zur Bewirkung von Schaltimpulsen in einer Sensorschaltung 3 während einer Drehung des Geberrades 1 und damit einer Vorbeibewegung an der Sensorschaltung 3 aufweist. Die Sensorschaltung 3 weist hier zwei berührungslos dem Geberrad 1 gegenüberliegende Sensorelemente 4 und 5, beispielsweise Hall-Elemente, auf. Weiterhin ist hier mit einem Pfeil 6 eine radiale Vibration angedeutet, die mit der erfindungsgemäßen Sensoranordnung erfasst und ausgewertet werden soll.

In Figur 2 ist ein Diagramm eines Verlaufs 7 eines Signals des Sensorelements 4 und eines Verlaufs 8 eines Signals des Sensorelements 5 während einer korrekten Drehung des Geberrades 1 ohne Vibrationen über der Zeit t gezeigt. Mit der Bezugsziffer 9 ist ein Differenzsignal aus den Signalverläufen 7 und 8 dargestellt. Figur 3 zeigt eine vergleichbare Darstellung von Signalverläufen 10, 11 und 12, bei denen die Signalverläufe 10 und 11 jedoch eine größere Phasendifferenz, hier 180°, aufweisen.

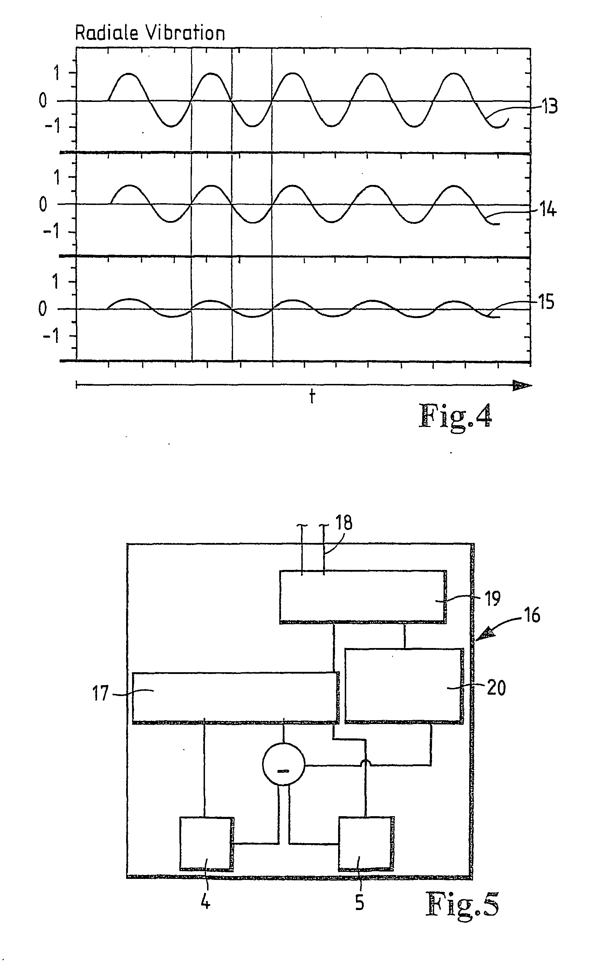

Aus Figur 4 ist im Unterschied zu den Figuren 2 und 3 das Verhalten von Signalverläufen 13, 14 und 15 der Sensorelemente 4 und 5 zu entnehmen, die im Falle einer Vibration im Abstand zwischen dem Geberrad 1 und den Sensorelementen 4 und 5, gemäß Pfeil 6 aus der Figur 1, auftreten.

Die Diagramme nach den Figuren 2 bis 4 zeigen, dass über eine Bestimmung der Phasenverschiebungen zwischen den Signalverläufen der Sensorelemente 4 und 5 eine Erkennung von radialen Vibrationen möglich ist. Die Figuren 2 und 3 zeigen insbesondere, dass bei einer korrekten Drehung des Geberrades 1 mindestens zwischen zweien der zusammengehörigen Signalverläufe 7,8,9 oder 10,11,12 eine von der Drehung abhängige Phasenverschiebung auftritt. Wenn allerdings die Phasenbeziehung zwischen den jeweiligen Signalverläufen, wie aus der Figur 4 anhand der Verläufe 13, 14 und 15 zu entnehmen ist, Null beträgt und somit also alle Signale gleichphasig verlaufen, so wird eine radiale Vibration erkannt und der Ausgang der Sensoranordnung könnte somit abgeschaltet werden, bis wieder eine Phasenverschiebung messbar ist. Das Signal 15 zeigt hier analog zu den Figuren 2 und 3 (Verläufe 9 und 12) das Differenzsignal aus den Signalverläufen 13 und 14.

Der Aufbau einer Sensoranordnung zur Durchführung des zuvor beschriebenen Verfahrens ist als Blockschaltbild einer Auswerteschaltung 16 zur Auswertung der Signalverläufe der Sensorelemente 4 und 5 in Figur 5 dargestellt. Diese Auswertung lässt sich hier derart realisieren, dass zunächst für die beiden Sensorelemente 4 und 5 sowie für deren Differenzsignal eventuell nach einer Offsetkorrektur in einer Phasenerkennungsschaltung 17 die Nulldurchgänge bestimmt werden.

Im Nulldurchgang wird hier für alle drei Signale auch noch die jeweilige Steigung ermittelt. Falls erstens alle drei Signale (vgl. Signalverläufe 13,14 und 15 aus der Figur 4) gleichzeitig durch Null gehen und zweitens die Steigungen das gleiche Vorzeichen haben, so sind die drei Signale in Phase und es handelt sich um eine störende Vibration. Das Signal am Ausgang 18 der Auswerteschaltung 16 kann dann durch eine Vibrationskontrollschaltung 19 unterdrückt werden, wobei die Vibrationskontrollschaltung 19 mit dem Ausgangssignal der Phasenerkennungsschaltung 17 und dem Ausgangssignal einer Signalaufbereitungs- und Komparatorschaltung 20 für das Differenzsignal versorgt wird.

## Patentansprüche

1. Verfahren zur Erfassung der Bewegung eines Elements relativ zu einer Sensoranordnung, bei dem
- Signale (7 bis 15) in Abhängigkeit von einem vor dem Sensor (3,4,5) vorbeibewegten Impulsgeber (1) ausgewertet werden, **dadurch gekennzeichnet, dass**
- die Signale (7,8;10,11;13,14) zweier in Bewegungsrichtung nebeneinander angeordneter Sensorelemente (4,5) ausgewertet werden, wobei die Phasengänge der Signale (7,8;10,11;13,14) der einzelnen Sensorelemente (4,5) und des Differenzsignals (9;12;15) der einzelnen Sensorelemente (4,5) zur Erkennung von Vibrationen rechtwinklig zur Bewegungsrichtung dahingehend ausgewertet werden, ob sich eine gleichsinnige Phasenänderung aller drei gemessener Signale (7 bis 15) ergibt.

2. Verfahren nach Anspruch 1, **dadurch gekennzeichnet, dass**
- die Auswertung der Signale (7 bis 15) derart erfolgt, dass die jeweiligen Nulldurchgänge und die Steigungen in den Nulldurchgängen ermittelt werden und dass
- für den Fall, dass alle drei Signale (7 bis 15) gleichzeitige Nulldurchgänge und Steigungen mit gleichem Vorzeichen aufweisen, eine Vibration (6) des Impulsgebers (1) detektiert wird.

3. Verfahren nach Anspruch 2, **dadurch gekennzeichnet, dass**
- bei der Erfassung der Nulldurchgänge eine Offsetkorrektur vorgenommen wird

4. Verfahren nach einem der Ansprüche 1 bis 3, **dadurch gekennzeichnet, dass**
- im Fall einer Erkennung einer radialen Vibration (6) das Ausgangssignal der Sensorauswerteschaltung (16) unterdrückt wird.

5. Verfahren nach einem der vorhergehenden Ansprüche, **dadurch gekennzeichnet, dass**
- bei der Erfassung der Drehung eines Geberrades (1) als Impulsgeber eines drehbaren Elements eine radiale Vibration (6) detektierbar ist.

6. Sensoranordnung zur Durchführung eines Verfahrens nach einem der vorhergehenden Ansprüche, **dadurch gekennzeichnet, dass**
- die Sensoranordnung (3) zwei berührungslose Sensoren (4,5) mit Hall-Elementen oder magnetoresistiven Elementen aufweist und dass
- eine Phasenerkennungsschaltung (17) mit jeweils einem Eingang für die Signale (7,8;10,11;13,14) der Sensorelemente (4,5) und einen Eingang für das Differenzsignal (9;12;15) aus den beiden Sensorsignalen (7,8;10,11;13,14) vorhanden ist

7. Sensoranordnung nach Anspruch 6, **dadurch gekennzeichnet, dass**
- eine Vibrationskontrollschaltung (19) dem Ausgang (18) der Sensorauswerteschaltung (17) vorgeschaltet ist, die Eingänge für den Ausgang der Phasenerkennungsschaltung (17) und für eine vom Differenzsignal angesteuerte Signalaufbereitungs- und Komparatorschaltung (20) aufweist.

8. Sensoranordnung nach einem der Ansprüche 6 bis 7, **dadurch gekennzeichnet, dass**
- die Sensoranordnung als Drehzahlfühler in einem Kraftfahrzeug eingesetzt ist.

## Claims

1. Method for detecting the movement of an element relative to a sensor arrangement, in which
- signals (7 to 15) are evaluated on the basis of a pulse generator (1) which is moved past in front of the sensor (3, 4, 5), **characterized in that**
- the signals (7, 8; 10, 11; 13, 14) from two sensor elements (4, 5) which are arranged beside one another in the direction of movement are evaluated, the phase responses of the signals (7, 8; 10, 11; 13, 14) from the individual sensor elements (4, 5) and of the differential signal (9; 12; 15) from the individual sensor elements (4, 5) being evaluated, for the purpose of detecting vibrations at right angles to the direction of movement, in order to determine whether a phase change in all three measured signals (7 to 15) in the same direction results.

2. Method according to Claim 1, **characterized in that**
- the signals (7 to 15) are evaluated in such a manner that the respective zero crossings and the gradients at the zero crossings are determined, and **in that**
- vibration (6) of the pulse generator (1) is detected in the event of all three signals (7 to 15) having simultaneous zero crossings and gradients with the same sign.

3. Method according to Claim 2, **characterized in that**
- an offset correction is carried out when detecting the zero crossings.

4. Method according to one of Claims 1 to 3, **characterized in that**
- the output signal from the sensor evaluation circuit (16) is suppressed if radial vibration (6) is detected.

5. Method according to one of the preceding claims, **characterized in that**
- radial vibration (6) can be detected when detecting the rotation of a sensor wheel (1) as a pulse generator of a rotatable element.

6. Sensor arrangement for carrying out a method according to one of the preceding claims, **characterized in that**
- the sensor arrangement (3) has two contactless sensors (4, 5) with Hall elements or magnetoresistive elements, and **in that**
- a phase detection circuit (17) having a respective input for the signals (7, 8; 10, 11; 13, 14) from the sensor elements (4, 5) and an input for the differential signal (9; 12; 15) of the two sensor signals (7, 8; 10, 11; 13, 14) is provided.

7. Sensor arrangement according to Claim 6, **characterized in that**
- a vibration monitoring circuit (19) is connected upstream of the output (18) of the sensor evaluation circuit (17), said vibration monitoring circuit having inputs for the output of the phase detection circuit (17) and for a signal conditioning and comparator circuit (20) which is driven by the differential signal.

8. Sensor arrangement according to one of Claims 6 to 7, **characterized in that**
- the sensor arrangement is used as a speed sensor in a motor vehicle.

## Revendications

1. Procédé pour détecter le mouvement d'un élément par rapport à un arrangement de détecteurs, avec lequel
- des signaux (7 à 15) sont analysés en fonction d'un codeur à impulsion (1) déplacé devant le détecteur (3, 4, 5), **caractérisé en ce que**
- les signaux (7, 8 ; 10, 11 ; 13, 14) de deux éléments de détection (4, 5) disposés l'un à côté de l'autre dans le sens du mouvement sont analysés, les phases des signaux (7, 8 ; 10, 11 ; 13, 14) des éléments de détection individuels (4, 5) et du signal différentiel (9 ; 12 ; 15) des éléments de détection individuels (4, 5) étant analysées pour détecter les vibrations perpendiculaires au sens du mouvement afin de vérifier, si pour les trois signaux mesurés (7 à 15), il se produit un déphasage dans le même sens.

2. Procédé selon la revendication 1, **caractérisé en ce que**
- l'analyse des signaux (7 à 15) est effectuée de telle sorte que les passages à zéro respectifs et les pentes au niveau des passages à zéro sont déterminés et que
- dans le cas où les trois signaux (7 à 15) présentent des passages à zéro et des pentes identiques avec les mêmes signes, une vibration (6) du codeur à impulsion (1) est détectée.

3. Procédé selon la revendication 2, **caractérisé en ce qu'**une correction du décalage est effectuée lors de la détection des passages à zéro.

4. Procédé selon l'une des revendications 1 à 3, **caractérisé en ce que** le signal de sortie du circuit d'analyse du détecteur (16) est inhibé en cas de détection d'une vibration radiale (6).

5. Procédé selon l'une des revendications précédentes, **caractérisé en ce qu'**une vibration radiale (6) peut être détectée lors de la détection de la rotation d'une roue de codeur (1) faisant office de codeur à impulsion d'un élément rotatif.

6. Arrangement de détection pour mettre en oeuvre un procédé selon l'une des revendications précédentes, **caractérisé en ce que**
- l'arrangement de détection (3) présente deux détecteurs (4, 5) sans contact comprenant des éléments à effet Hall ou des éléments magnétorésistifs et que
- il existe un circuit de détection de phase (17) comprenant respectivement une entrée pour les signaux (7, 8 ; 10, 11 ; 13, 14) de éléments de détection (4, 5) et une entrée pour le signal différentiel (9 ; 12 ; 15) des deux signaux de détecteur (7, 8 ; 10, 11 ; 13, 14).

7. Arrangement de détection selon la revendication 6, **caractérisé en ce qu'**un circuit de contrôle des vibrations (19) est branché en amont de la sortie (18) du circuit d'analyse des détecteurs (17), lequel présente des entrées pour la sortie du circuit de détection de phase (17) et pour un circuit de conditionnement de signal et comparateur (20) commandé par le signal différentiel.

8. Arrangement de détection selon l'une des revendications 6 à 7, **caractérisé en ce que** l'arrangement de détection est utilisé en tant que capteur de vitesse de rotation dans un véhicule automobile.
